# EUROPÄISCHE PATENTSCHRIFT

(11) **EP 3 959 486 B1**
(45) Veröffentlichungstag und Bekanntmachung des Hinweises auf die Patenterteilung: **08.05.2024**
(21) Anmeldenummer: 20716378.3
(22) Anmeldetag: 02.03.2020
(51) Int. Cl.: G01D 3/08, G01D 5/244, F16D 48/06

(54) **VERFAHREN ZUM EINSTELLEN EINER POSITION EINES AKTORS NACH UNTERBRECHUNG EINER SPANNUNGSVERSORGUNG**
METHOD OF SETTING A POSITION OF AN ACTUATOR AFTER INTERRUPTION OF A POWER SUPPLY
PROCÉDÉ DE RÉGLAGE DE LA POSITION D'UN ACTIONNEUR APRÈS UNE INTERRUPTION DE L'ALIMENTATION ÉLECTRIQUE

(30) Priorität: 24.04.2019 DE 102019110540
(43) Veröffentlichungstag der Anmeldung: 02.03.2022
(73) Patentinhaber: Schaeffler Technologies AG & Co. KG, 91074 Herzogenaurach (DE)
(72) Erfinder: HODRUS, Erhard, 77855 Achern (DE)
(86) Internationale Anmeldenummer: PCT/DE2020/100139
(87) Internationale Veröffentlichungsnummer: WO 2020/216388

(56) Entgegenhaltungen:
- DE-A1-102010 009 735
- DE-A1-102012 220 712
- DE-A1-102017 103 035

## Beschreibung

Die Erfindung betrifft ein Verfahren zum Einstellen einer Position eines Aktors nach Unterbrechung einer Spannungsversorgung, bei welchem ein Parameterwert eines den Aktor betätigenden Bauteils erfasst wird, wobei aus dem Parameterwert eine Aktorposition bestimmt wird, die nach Wiederherstellung der Versorgungsspannung referenziert und plausibilisiert wird.

DE 10 2010 009 735 A1 offenbart ein Verfahren zur Betätigung eines Kupplungsaktors, wobei Referenzier- und Plausibilisiervorgänge durchgeführt werden.

DE 10 2012 220 712 A1 offenbart ein Verfahren zur Steuerung eines Aktors zur Betätigung einer Bremse eines Startergetriebes zum Starten eines Kraftfahrzeugmotors.

DE 10 2017 103 035 A1 offenbart ein Verfahren zum Betrieb einer Sensoranordnung zur Bestimmung einer Position eines Aktors in einem Kraftfahrzeug.

Aus der DE 10 2016 204 890 A1 ist ein Verfahren zum justierten Befestigen einer Magnetsensorvorrichtung an einem Aktuator bekannt. Die Magnetsensorvorrichtung weist ein Gebermodul mit wenigstens einem Permanentmagneten sowie ein Sensormodul mit einem ersten Sensor zur Drehwinkelmessung und einen zweiten Sensor zur Umdrehungszählung auf. Insbesondere der Sensor zur Zählung der Umdrehungen verliert durch Trennen des Aktors von einer Spannungsversorgung seine Information für die nächste Versorgungsphase. Deshalb ist nach dem Trennen des Aktors von der Versorgungsspannung ein Referenzieren mit Plausibilisieren notwendig, um das entsprechende Positionssignal des Aktors mit der realen Aktormechanik abzugleichen.

Aus einer noch unveröffentlichten deutschen Patentanmeldung der Anmelderin ist ein Verfahren zum Lernen der Position eines eine Parksperre betätigenden Aktors bekannt, bei welchem die Aktorposition mit einem Relativwertgeber ermittelt wird, wobei der Aktor zwischen zwei Endanschlägen verfahren wird. Zum Lernen der Position wird diese referenziert und anschließend plausibilisiert, wobei zur Referenzierung der Position des Aktors der eine Endanschlag angefahren und detektiert wird und zur Plausibilisierung der referenzierten Position des Aktors dieser in Richtung des gegenüberliegenden Endanschlages verfahren wird. Ein solches Referenzieren und Plausibilisieren muss nach jedem Trennen des Aktors von der Spannungsversorgung durchgeführt werden. Zum Schutz der Batterie kann das Referenzieren nur etwa 100-mal durchgeführt werden, da der Anschlag nicht dauerfest ist. Durch eine Relaisabschaltung ist es aber notwendig, deutlich öfter als 100-mal referenzieren zu können. Die Relaisabschaltung dient dem Schutz der Batterie, wobei alle Verbraucher über das Relais von der Spannungsversorgung getrennt werden, wenn die Batteriespannung eine Schwelle unterschreitet. Der Erfindung liegt die Aufgabe zugrunde, ein Verfahren zur Einstellung einer Position eines Aktors nach Unterbrechung einer Spannungsversorgung anzugeben, bei welchem die Referenzierungs- und Plausibilisierungsstrategie vereinfacht wird.

Erfindungsgemäß ist die Aufgabe dadurch gelöst, dass eine Referenzierung unterbunden wird, wenn der Aktor vor Unterbrechung der Spannungsversorgung richtig abgestellt wurde, das heisst, wenn der stromlos geschaltete Aktor infolge einer Rückverdrehung aus gespeicherter Energie einer im Aktor befindlichen Schlingfeder eine vorgegebene Position eingenommen hat.

Dies hat den Vorteil, dass die Referenzierungs- und Plausibilisierungsstrategie verkürzt wird und durch Unterbindung der Referenzierung in vorgegebenen Fällen ein Anfahren des Anschlages des Aktors unterbunden wird, wodurch dessen Lebensdauer verlängert wird. Vorteilhafterweise wird nach Abstellen des Aktors mindestens ein signifikanter, ein die Aktorposition im Betriebszustand des Aktors charakterisierender Parameterwert nicht flüchtig abgespeichert und ein nach der Wiederherstellung der Spannungsversorgung ausgegebener aktueller Parameterwert mit dem abgespeicherten Parameterwert verglichen, wobei bei einer Unterschreitung eines Schwellwertes, vorzugsweise durch eine Differenz aus abgespeichertem und aktuellem Parameterwert, die Referenzierung unterbunden wird. Durch die Bildung der Differenz und den Vergleich mit dem Schwellwert lässt sich sehr einfach feststellen, ob der Aktor in der richtigen Position abgestellt wurde.

In einer Ausgestaltung wird bei Unterschreitung des Schwellwertes die Aktorposition so eingestellt, dass der mindestens eine Parameterwert des den Aktor betätigenden Bauteiles, dem nicht flüchtigen abgespeicherten Parameterwert entspricht. Somit nimmt der Aktor die Position ein, die er vor dem Ausfall der Versorgungsspannung besaß.

In einer Variante erfolgt die Plausibilisierung auf der Basis des nicht flüchtig abgespeicherten Parameterwertes. Somit wird sichergestellt, dass der nach Ausfall der Spannungsversorgung eingenommene Parameterwert auch wirklich für den weiteren Betrieb des Aktors genutzt werden kann. Auch hier entfällt ein Anfahren eines weiteren Anschlages, wodurch die Aktormechanik geschützt wird.

In einer Ausführungsform wird zur Plausibilisierung ein weiterer, die Aktorposition im Betriebszustand des Aktors charakterisierender Parameter ausgewertet. Mittels dieses zusätzlichen Parameters kann zuverlässig auf den Betriebszustand des Aktors vor dem Ausfall der Versorgungsspannung geschlossen werden, was die Zuverlässigkeit der Plausibilisierung erhöht.

Vorteilhafterweise wird bei Überschreitung des Schwellwertes, vorzugsweise durch die Differenz aus abgespeichertem und aktuellem Parameterwert, und/oder unplausiblem, nicht flüchtigen abgespeichertem Parameterwert die Referenzierung durchgeführt. Die korrekte Funktionsweise des Aktors wird auf diese Weise zuverlässig gesichert.

In einer Weiterbildung wird zur Referenzierung der Aktor gegen einen ersten Anschlag verfahren, während bei der Plausibilisierung der Aktor in eine entgegengesetzte Richtung zu einem zweiten Anschlag bewegt wird. Da durch den Wegfall der Referenzierung bei korrekt eingestellter Position des Aktors die Anzahl der Anschläge durch Verfahren des Aktors reduziert wird, stellt die Betätigung des Anschlages bei der Referenzierung keine Einschränkung der Lebensdauer des Anschlages dar.

In einer Ausgestaltung wird beim Abstellen des Aktors als Parameterwert eine Winkelposition des den Aktor betätigenden Bauteiles nicht flüchtig abgespeichert und ein nach der Wiederherstellung der Spannungsversorgung von einem Singleturn-Sensor ausgegebene aktuelle Winkelposition mit der abgespeicherten Winkelposition verglichen, wobei bei Unterschreitung eines Schwellwertes, vorzugsweise durch die Differenz aus abgespeicherter und aktueller Winkelposition, die Referenzierung unterbunden wird. Das vorgeschlagene Verfahren ist somit insbesondere für Aktoren von Bedeutung, die einen Elektromotor oder einen Spindeltrieb aufweisen. Auf einen zweiten Sensor zur Umdrehungszählung kann somit verzichtet werden.

In einer Ausgestaltung ist der Aktor als hydraulischer Kupplungsaktor ausgebildet, bei welchem nach dem Vergleich der Winkelposition des den Aktor betätigenden Bauteils zur Plausibilisierung ein Druck einer Hydraulikflüssigkeit im Hydrauliksystem ausgewertet wird, wobei, wenn bei Überschreitung einer Druckschwelle durch den detektierten Druck die Aktorposition in einem definierten Positionsbereich des Aktors liegt, der Kupplungsaktor zum Betreiben der Kupplung freigegeben wird. Durch Überprüfen des Druckes in dem den Kupplungsaktor umfassenden Hydrauliksystem erfolgt eine einfache Plausibilisierung der durch die Winkelposition des den Aktor betätigenden Bauteils vorgegebene Position des Aktors.

In einer weiteren Ausführungsform ist ein dem Positionsbereich des Aktors entsprechender Winkelpositionsbereich des den Aktor betätigenden Bauteils für eine Akzeptanz der plausibilisierten abgespeicherten Winkelposition kleiner als eine Umdrehung des Singleturn-Sensors. Damit wird sicher ausgeschlossen, dass der Aktor um ein Vielfaches von einer Umdrehung verdreht wurde.

Die Erfindung lässt zahlreiche Ausführungsformen zu. Eine davon soll anhand der in der Zeichnung dargestellten Figuren näher erläutert werden.

Es zeigen:
- Fig. 1: ein Ausführungsbeispiel einer Vorrichtung zur Durchführung des erfindungsgemäßen Verfahrens,
- Fig. 2: ein Ausführungsbeispiel des erfindungsgemäßen Verfahrens.

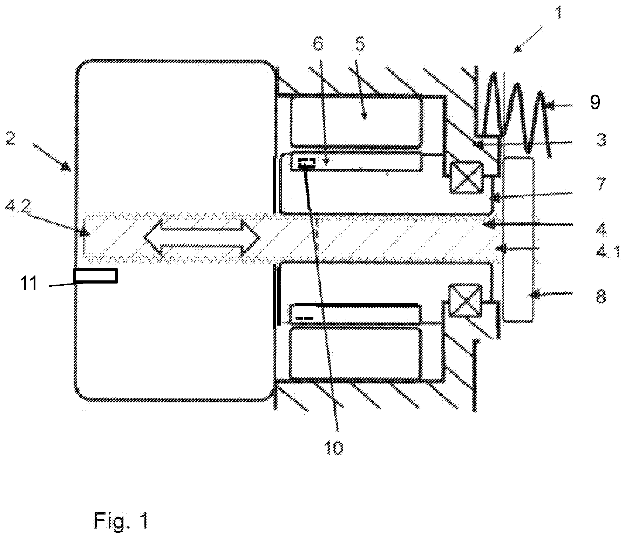

In Fig. 1 ist ein Ausführungsbeispiel einer Vorrichtung in Form eines hydraulischen Kupplungsaktors 1 zur Durchführung des erfindungsgemäßen Verfahrens dargestellt. Der hydraulische Kupplungsaktor 1 umfasst ein Steuergerät 2, das einen Elektromotor zur Betätigung des Kupplungsaktors 1 ansteuert. Das Steuergerät 2 ist als Modul ausgebildet, welches mit einem Hydraulikmodul 3 verbunden ist. Bei einer Lageveränderung des Kupplungsaktors 1 ist eine Spindel 4 entlang eines axialen Aktorweges beidseitig bewegbar. Die Spindel 4 wird von dem Elektromotor angetrieben, der einen Stator 5 aufweist. Innerhalb des Stators 5 ist zentrisch eine Rotorwelle 6 gelagert, die über ein nicht weiter gezeigtes Planetenwälzgetriebe mit der Spindel 4 im Eingriff steht. Das Planetenwälzgetriebe ist von einer Hülse 7 ummantelt. An der dem Steuergerät 2 abgewandten Ende 4.1 der Spindel 4 ist ein Druckstück 8 befestigt, welches auf ein nicht weiter dargestelltes Element einer hydraulischen Strecke, wie einen Geberzylinder, wirkt. Mit Bezugszeichen 4.2 ist das andere Ende der Spindel gekennzeichnet. Zwischen dem Druckstück 8 und dem Hydraulikmodul 3 erstreckt sich ein Faltenbalg 9, der den Kupplungsaktor 1 vor Verschmutzung schützt. Der Rotorwelle 6 gegenüberliegend ist ein Rotorlagesensor 10 in Form eines Singleturn-Sensors angeordnet.

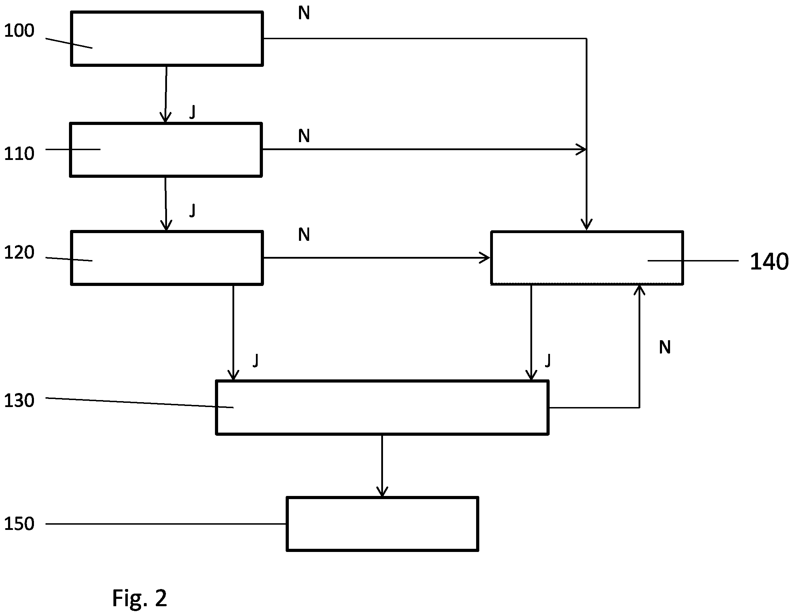

In dem Steuergerät 2 ist ein Verfahren abgespeichert, mittels welchem eine Position des Kupplungsaktors 1 nach Unterbrechung einer Spannungsversorgung eingestellt wird. Dieses Verfahren wird bei jeder Initialisierung, d.h. Verbindung des Steuergerätes 2 mit einer Spannungsversorgung, durchgeführt. Ein Ausführungsbeispiel des erfindungsgemäßen Verfahrens ist in Fig. 2 gezeigt. Im Block 100 wird geprüft, ob der Kupplungsaktor 1 sich nach Wegfall der Spannungsversorgung in einer vorgegebenen Position abstellt. Diese vorgegebene Position soll im Weiteren als richtige Position bezeichnet werden. Dies ist eine Position, die der stromlos geschaltete Kupplungsaktor 1 infolge einer möglichen Rückverdrehung aus gespeicherter Energie einer im Kupplungsaktor 1 befindlichen Schlingfeder einnimmt. Diese Position wird durch die Winkelposition der Rotorwelle 6 charakterisiert, die durch den Singleturn-Sensor 10 erfasst wird. In diesem Zustand ist Kupplungsaktor 1 selbsthaltend und sollte seine Position nicht mehr selbstständig ändern.

Danach wird im Block 110 festgestellt, ob diese Winkelposition des Singleturn-Sensors 10 und die Aktorposition, welche einer Position der Spindel 4 entspricht, richtig in einem nicht flüchtigen Speicher des Steuergerätes 2 abgespeichert sind. Die axiale Position der Spindel 4 wird von einem Wegsensor 11 bestimmt, welcher im Steuergerät 2 der Spindel 4 gegenüberliegend positioniert ist.

Nach der erneuten Verbindung des Steuergerätes 2 mit der Spannungsversorgung liefert der Singleturn-Sensor 10 eine aktuelle Winkelposition der Rotorwelle 6, die im Block 120 mit der abgespeicherten Winkelposition verglichen wird. Weicht eine Differenz zwischen der abgespeicherten und der aktuell bestimmten Winkelposition nur wenige Grad vom Winkelwert der Rotorwelle 6 beim richtigen Abstellen des Kupplungsaktors 1 ab, d.h. ist diese Differenz kleiner als ein vorgegebener Schwellwert, so wird auf ein aktives Ertasten des unteren Endanschlages des Aktors 1 verzichtet. Somit wird keine Referenzierung durchgeführt. Es wird zum Block 130 übergegangen, wo der abgespeicherte Winkelwert als Startposition für die nun folgende Plausibilisierung eingestellt wird. Zum Plausibilisieren wird im Block 130 ein weiterer, den Betriebszustand des Kupplungsaktors 1 zum Zeitpunkt des Spannungsausfalls charakterisierende Parameter betrachtet. In diesem Fall wird ein Druck, welcher in der hydraulischen Strecke auftritt, überwacht. Da eine Korrelation zwischen dem Druck und einer Aktorposition besteht, wird der Druck mit einer Druckschwelle verglichen. Die Aktorposition, bei welcher der Druck die Druckschwelle überschreitet, muss in einem vorgegebenen Positionsbereich liegen. Ist dies der Fall, kann der Aktor zur Ansteuerung einer nicht weiter dargestellten Kupplung verwendet werden (Block 150), da der Positionsbereich sowohl mit dem erwarteten Druck als auch mit der eingestellten Winkelposition der Rotorwelle 6 korreliert.

Wird in Block 110 festgestellt, dass Winkelposition der Rotorwelle 6 und die Position des Kupplungsaktors 1 nicht richtig gespeichert sind, wird zum Block 140 übergegangen, wo eine Referenzierung durchgeführt, wird. Liegt die Position des abgestellten Kupplungsaktors 1 bei der Drucküberwachung im Block 130 außerhalb des vordefinierten Positionsbereiches, so scheint der Kupplungsaktor 1 bewegt worden zu sein. In diesem Fall muss der negative Anschlag des Kupplungsaktors 1 ertastet werden, d.h. es muss ebenfalls eine Referenzierung durchgeführt werden (Block 140). Da es theoretisch möglich ist, dass der Kupplungsaktor 1 sich um ein Vielfaches von einer Umdrehung verdreht, wird bei der Plausibilisierung im Block 130 dieser Fall geprüft und ausgeschlossen. Der Bereich für die Akzeptanz des Plausibilisierungsergebnisses muss so vorteilhaft weniger als eine Umdrehung des Rotorwelle 6 sein, aus welcher sich der vorgegebene Positionsbereich des Kupplungsaktors 1 ergibt. Ist der Vergleich im Block 120 nicht erfolgreich, wird ebenfalls eine Referenzierung durchgeführt (Block 140). Es ist zu bemerken, dass nach jeder durchgeführten Referenzierung eine Plausibilisierung durchgeführt werden muss.

### Bezugszeichenliste

- 1: Aktor
- 2: Steuergerät
- 3: Hydraulikmodul
- 4: Spindel
- 5: Stator
- 6: Rotorwelle
- 7: Hülse
- 8: Druckstück
- 9: Faltenbalg
- 10: Singleturn-Sensor
- 11: Wegsensor

## Patentansprüche

1. Verfahren zum Einstellen einer Position eines Aktors (1) nach Unterbrechung einer Spannungsversorgung, welche den Aktor versorgt, wobei bei dem Verfahren ein Parameterwert eines den Aktor (1) betätigenden Bauteils (6) erfasst wird, wobei aus dem Parameterwert eine Aktorposition bestimmt wird, die nach Wiederherstellung der Versorgungsspannung referenziert und plausibilisiert wird, **dadurch gekennzeichnet, dass** eine Referenzierung der Aktorposition dann unterbunden wird, wenn der Aktor (1) nach Unterbrechung der Spannungsversorgung richtig abgestellt wurde, das heißt, wenn der stromlos geschaltete Aktor (1) infolge einer Rückverdrehung aus gespeicherter Energie einer im Aktor (1) befindlichen Schlingfeder eine vorgegebene Position eingenommen hat.

2. Verfahren nach Anspruch 1, **dadurch gekennzeichnet, dass** nach Abstellen des Aktors (1) mindestens ein signifikanter, ein die Aktorposition im Betriebszustand des Aktors (1) charakterisierender Parameterwert nicht flüchtig abgespeichert wird und ein nach der Wiederherstellung der Spannungsversorgung ermittelter aktueller Parameterwert mit dem abgespeicherten Parameterwert verglichen wird, wobei bei einer Unterschreitung eines Schwellwertes, durch eine Differenz aus abgespeichertem und aktuellem Parameterwert, die Referenzierung unterbunden wird.

3. Verfahren nach Anspruch 2, **dadurch gekennzeichnet, dass** bei Unterschreitung des Schwellwertes der Parameterwert so eingestellt wird, dass der Parameterwert dem nicht flüchtig abgespeicherten Parameterwert des den Aktor betätigenden Bauteils entspricht.

4. Verfahren nach Anspruch 2 oder 3, **dadurch gekennzeichnet, dass** die Plausibilisierung auf der Basis des nicht flüchtig abgespeicherten Parameterwerts erfolgt.

5. Verfahren nach mindestens einem der vorhergehenden Ansprüche, **dadurch gekennzeichnet, dass** zur Plausibilisierung ein weiterer, die Aktorposition im Betriebszustand des Aktors (1) charakterisierender Parameter ausgewertet wird.

6. Verfahren nach mindestens einem der Ansprüche 2 bis 5, **dadurch gekennzeichnet, dass** bei Überschreitung des Schwellwertes, durch die Differenz aus abgespeicherten und aktuellen Parameterwerten, und/oder unplausiblen, nicht flüchtig abgespeicherten Parameterwerten die Referenzierung durchgeführt wird.

7. Verfahren nach mindestens einem der vorhergehenden Ansprüche, **dadurch gekennzeichnet, dass** zur Referenzierung der Aktor (1) gegen einen ersten Anschlag verfahren wird, während bei der Plausibilisierung der Aktor in eine entgegengesetzte Richtung zu einem zweiten Anschlag bewegt wird.

8. Verfahren nach mindestens einem der vorhergehenden Ansprüche, **dadurch gekennzeichnet, dass** nach Abstellen des Aktors (1) als Parameterwert eine Winkelposition des den Aktor (1) betätigenden Bauteils (6) nicht flüchtig abgespeichert wird und eine nach der Wiederherstellung der Spannungsversorgung von einem Singleturn-Sensor (10) ausgegebene aktuelle Winkelposition mit der abgespeicherten Winkelposition verglichen wird, wobei bei der Unterschreitung des Schwellwertes durch die Differenz aus abgespeicherter und aktueller Winkelposition die Referenzierung unterbunden wird.

9. Verfahren nach Anspruch 8, **dadurch gekennzeichnet, dass** der Aktor (1) als hydraulischer Kupplungsaktor ausgebildet ist, bei welchem nach dem Vergleich der Winkelposition des den Kupplungsaktor betätigenden Bauteils (3) zur Plausibilisierung ein Druck einer Hydraulikflüssigkeit in einem hydraulischen System ausgewertet wird, wobei, wenn bei Überschreitung einer Druckschwelle durch den detektierten Druck die Aktorposition in einem definierten Positionsbereich liegt, der Kupplungsaktor (1) zum Betreiben einer Kupplung freigegeben wird.

10. Verfahren nach einem der Ansprüche 8 oder 9, **dadurch gekennzeichnet, dass** ein dem Positionsbereich des Aktors (1) entsprechender Winkelpositionsbereich des den Aktor (1) betätigenden Bauteils (3) für eine Akzeptanz der plausibilisierten abgespeicherten Winkelposition kleiner als eine Umdrehung des Singleturn-Sensors (10) ist.

## Claims

1. A method of setting a position of an actuator (1) after interruption of a power supply that supplies the actuator, wherein in the method a parameter value of a component (6) that actuates the actuator (1) is detected, wherein an actuator position is determined from the parameter value, which is referenced and checked for plausibility after the supply voltage has been restored, **characterised in that** referencing of the actuator position is prevented when the actuator (1) has been switched off correctly after the power supply has been interrupted, i.e. when the de-energised actuator (1) has assumed a predetermined position as a result of a reverse rotation of stored energy of a wrap spring located in the actuator (1).

2. The method according to claim 1, **characterised in that** after switching off the actuator (1), at least one significant parameter value characterising the actuator position in the operating state of the actuator (1) is stored in a non-volatile memory and a current parameter value determined after the power supply has been restored is compared with the stored parameter value, wherein, if a threshold value is not met, referencing is prevented due to a difference between the stored and current parameter values.

3. The method according to claim 2, **characterised in that** when the threshold value is not met, the parameter value is set so that the parameter value corresponds to the parameter value of the component actuating the actuator stored in the non-volatile memory.

4. The method according to claim 2 or 3, **characterised in that** the plausibility check is carried out on the basis of the parameter value stored in the non-volatile memory.

5. The method according to at least one of the preceding claims, **characterised in that** a further parameter characterising the actuator position in the operating state of the actuator (1) is evaluated to check the plausibility.

6. The method according to at least one of claims 2 to 5, **characterised in that** when the threshold value is exceeded, referencing is carried out via the difference between stored and current parameter values and/or implausible parameter values stored in the non-volatile memory.

7. The method according to at least one of the preceding claims, **characterised in that**, for referencing, the actuator (1) is moved against a first stop, while during the plausibility check, the actuator is moved in an opposite direction to a second stop.

8. The method according to at least one of the preceding claims, **characterised in that** after the actuator (1) has been switched off, an angular position of the component (6) actuating the actuator (1) is stored as a parameter value in the non-volatile memory and, after the power supply has been restored, a current angular position output via a single-turn sensor (10) is compared with the stored angular position, wherein referencing is prevented if the threshold value is not met due to the difference between the stored and current angular positions.

9. The method according to claim 8, **characterised in that** the actuator (1) is designed as a hydraulic clutch actuator, in which, after comparing the angular position of the component (3) actuating the clutch actuator, a pressure of a hydraulic fluid in a hydraulic system is evaluated to check plausibility, wherein, if the actuator position is located in a defined position range when a pressure threshold is exceeded by the detected pressure, the clutch actuator (1) is released to operate a clutch.

10. The method according to one of claims 8 or 9, **characterised in that** an angular position range of the component (3) actuating the actuator (1) corresponding to the position range of the actuator (1) is smaller than one revolution of the single-turn sensor (10) for acceptance of the plausibility-checked stored angular position.

## Revendications

1. Procédé de réglage d'une position d'un actionneur (1) après une interruption d'une alimentation électrique de l'actionneur, dans lequel dans le procédé une valeur de paramètre d'un composant (6) d'actionnement de l'actionneur (1) est détectée, une position de l'actionneur étant déterminée à partir de la valeur du paramètre, puis référencée et contrôlée en plausibilité après le rétablissement de l'alimentation électrique, **caractérisé en ce qu'**un référencement de la position de l'actionneur est empêché si l'actionneur (1) a été correctement éteint après une interruption de l'alimentation électrique, c'est-à-dire que l'actionneur (1) éteint à la suite d'une rotation inverse a pris une position prédéterminée à l'aide de l'énergie stockée d'un ressort hélicoïdal situé dans l'actionneur (1).

2. Procédé selon la revendication 1, **caractérisé en ce qu'**après la mise hors tension de l'actionneur (1), au moins une valeur de paramètre significative caractérisant la position de l'actionneur lorsque l'actionneur (1) est en état de fonctionnement est enregistrée de manière non volatile et une valeur de paramètre actuelle déterminée après le rétablissement de l'alimentation électrique est comparée avec la valeur de paramètre enregistrée, de sorte que si une valeur seuil n'est pas atteinte en raison d'une différence entre les valeurs de paramètre enregistrée et actuelle, le référencement n'a pas lieu.

3. Procédé selon la revendication 2, **caractérisé en ce que** si la valeur seuil n'est pas atteinte, la valeur du paramètre est réglée de telle sorte que la valeur du paramètre corresponde à la valeur du paramètre enregistrée de manière non volatile du composant actionnant l'actionneur.

4. Procédé selon la revendication 2 ou 3, **caractérisé en ce que** le contrôle de plausibilité est effectué sur la base de la valeur de paramètre enregistrée de manière non volatile.

5. Procédé selon au moins l'une des revendications précédentes, **caractérisé en ce qu'**un autre paramètre caractérisant la position de l'actionneur à l'état de fonctionnement de l'actionneur (1) est évalué à des fins de contrôle de la plausibilité.

6. Procédé selon au moins l'une des revendications 2 à 5, **caractérisé en ce que** le référencement est effectué si la valeur seuil est dépassée en raison d'une différence entre les valeurs de paramètres enregistrée et actuelle et/ou des valeurs de paramètres enregistrées non plausibles et non volatiles.

7. Procédé selon au moins l'une des revendications précédentes, **caractérisé en ce qu'**aux fins du référencement, l'actionneur (1) est déplacé jusqu'à une première butée, tandis que lors du contrôle de plausibilité, l'actionneur est déplacé dans une direction opposée jusqu'à une deuxième butée.

8. Procédé selon au moins l'une des revendications précédentes, **caractérisé en ce qu'**après la mise hors tension de l'actionneur (1), une position angulaire du composant (6) actionnant l'actionneur (1) est enregistrée de manière non volatile comme valeur de paramètre et une position angulaire actuelle indiquée par un capteur monotour (10) après le rétablissement de l'alimentation électrique est comparée à la position angulaire enregistrée, le référencement n'ayant pas lieu si la valeur seuil n'est pas atteinte en raison de la différence entre la position angulaire enregistrée et actuelle.

9. Procédé selon la revendication 8, **caractérisé en ce que** l'actionneur (1) est conçu comme un actionneur d'embrayage hydraulique dans lequel, après comparaison de la position angulaire du composant (3) actionnant l'actionneur d'embrayage, une pression d'un fluide hydraulique dans un système hydraulique est évaluée à des fins de contrôle de la plausibilité, l'actionneur d'embrayage (1) étant relâché pour faire fonctionner un embrayage si la position de l' actionneur se trouve dans une plage de positions définie lorsqu'un seuil de pression est dépassé par la pression détectée.

10. Procédé selon l'une des revendications 8 ou 9, **caractérisé en ce qu'**une plage de positions angulaires du composant (3) actionnant l'actionneur (1) correspondant à la plage de positions de l'actionneur (1) est inférieure à un tour du capteur monotour (10) pour une acceptation de la position angulaire enregistrée ayant fait l'objet d'un contrôle de la plausibilité.
